# EUROPEAN PATENT SPECIFICATION

(11) **EP 0 655 693 B1**
(45) Date of publication and mention of the grant of the patent: **06.03.2002**
(21) Application number: 94118530.8
(22) Date of filing: 24.11.1994
(51) Int. Cl.: G06F 15/02

(54) **Graph display apparatus and method**
Graphenanzeige-Vorrichtung und -Verfahren
Dispositif et méthode d'affichage de graphes

(30) Priority: 26.11.1993 JP 29687293
(43) Date of publication of application: 31.05.1995
(73) Proprietor: Casio Computer Co., Ltd., Shibuya-ku, Tokyo 151-8543 (JP)
(72) Inventor: Negishi, Osamu, c/o Patent Department, Hamura-shi, Tokyo 190-11 (JP); Nakamura Fuminobu, c/o Patent Department, Hamura-shi, Tokyo 190-11 (JP); Okano, Mitsuru, c/o Patent Department, Hamura-shi, Tokyo 190-11 (JP); Akaza, Syunsuke, c/o Patent Department, Hamura-shi, Tokyo 190-11 (JP)
(74) Representative: Grünecker, Kinkeldey, Stockmair & Schwanhäusser Anwaltssozietät

(56) References cited:
- US-A- 5 046 024
- US-A- 5 261 031
- PATENT ABSTRACTS OF JAPAN vol. 16, no. 586 (P-1463) 25 December 1992 & JP-A-04 235 658 (CASIO COMPUTER COMPANY LIMITED) 24 August 1992
- PATENT ABSTRACTS OF JAPAN vol. 17, no. 509 (P-1612) 13 September 1993 & JP-A-05 133 980 (YOKOGAWA ELECTRIC CORPORATION) 28 May 1993

## Description

The present invention relates to a graph display apparatus according to the preamble of claim 1 and to a graph display control method to be used in a graph display control apparatus according to the preamble of claim 4.

For example, electronic calculators which have a functional calculation function and also have a graph display function for calculating and displaying the graph of an input functional formula have been commercially available.

More specifically, X-coordinate values in units of display dots are substituted in a functional formula in accordance with X- and Y-coordinate (Xmin, Xmax) and (Ymin, Ymax) which are designated in advance on a display screen, and calculated Y-coordinate values are sequentially written on a VRAM (Video Random Access Memory), thus displaying the graph of the functional formula. Such a graph display technique is described in, e.g., USP 4,794,553, USP 4,794,554, and the like.

However, in the conventional graph display apparatus, since a graph is displayed in accordance with predetermined X- and Y-coordinate ranges, if a plurality of graphs are to be simultaneously displayed, the same coordinate ranges must be set, and graphs with different coordinate ranges cannot be displayed in comparison with each other to perform analysis.

Patent Abstracts of Japan vol. 16, no. 508 (P-1463) December 25, 1992 & JP-A-04 35 658 (CASIO COMPUTER COMPANY., LTD) August 24, 1992 discloses a compact electronic computer with a graph display function. This computer allows to display two different graphs on the basis of inputted coordinate data and range data. The two graphs are displayed together.

Patent Abstract of Japan vol. 17, no, 509 (P-1612) September 13, 1993 & JP-A-05 133 980 (YOKOGAWA ELECTRIC CORPORATION ) May 28, 1993 shows a waveform display device comprising two different display areas on a display screen one of them for displaying an overall waveform and the other one for displaying selected portions in an enlarged scale. Two slide bars are provided for defining the position of the overall waveform to be enlarged.

The present invention has as its object to provide a graph display apparatus and a graph display control method to be used in a graph display control apparatus which can simultaneously display a graph and in an enlarged scale a freely selected portion thereof.

The above object, is achieved according to the present invention by a graph display apparatus having the features of claim 1 and by a graph display control method to be used in a graph display control apparatus having the features of claim 4.

With this arrangement, a graph display apparatus of the present invention can simultaneously display graphs corresponding to a plurality of formulas on a plurality of divided screen areas.

This invention can be more fully understood from the following detailed description when taken in conjunction with the accompanying drawings, in which:
FIGS. 1 through 8B show the first embodiment of the present invention, in which
   FIG. 1 is a plan view showing the outer appearance of a graph display apparatus according to the first embodiment,
   FIG. 2 is a block diagram showing the arrangement of an electronic circuit in the graph display apparatus,
   FIG. 3 is a flow chart showing graph formula input processing in the graph display apparatus,
   FIG. 4 is a flow chart showing graph divisional display processing in the graph display apparatus,
   FIG. 5 is a flow chart showing graph enlargement display processing in the graph display apparatus,
   FIG. 6 is a flow chart showing coordinate range setting processing in the graph display apparatus,
   FIGS. 7A and 7B are views showing the display states of input formulas and coordinate ranges upon execution of the graph formula input processing and the coordinate range setting processing in the graph display apparatus, and
   FIGS. 8A and 8B are views showing the graph display states upon execution of the graph divisional display processing, graph enlargement display processing, and coordinate range changing processing in the graph display apparatus;
FIG. 9 is a view showing another graph display state; and
FIG. 10 is a view showing still another graph display state.

An embodiment of the present invention will be described below with reference to the accompanying drawings.

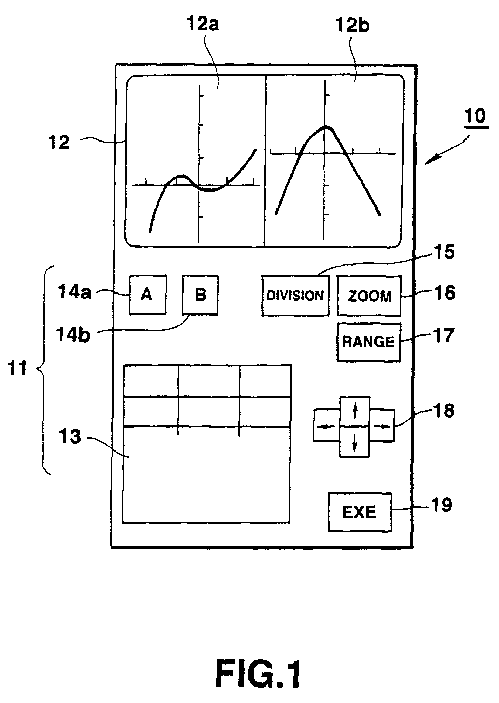

FIG. 1 shows the outer appearance of a graph display apparatus.

An apparatus main body 10 of this graph display apparatus has a size which allows a user to hold the apparatus in his or her hand.

A key input unit 11 and a graphic display unit 12 having a dot-matrix liquid crystal display screen are arranged on the front surface of the apparatus main body 10.

The display screen of the graphic display unit 12 is divided into first and second screen areas 12a and 12b when, for example, two graphs are simultaneously displayed on independent coordinate systems.

The key input unit 11 comprises numeric·symbol keys 13 for inputting functional formula data to be displayed as a graph and for inputting coordinate ranges (Xmin, Xmax) and (Ymin, Ymax) of the X- and Y-axes used upon calculation of the graph of the input formula, an "A" key 14a for designating the first screen area 12a of the graphic display unit 12, a "B" key 14b for designating the second screen area 12b, a "division" key 15 for setting a graph divisional display mode, a "Zoom" key 16 for setting a graph enlargement display mode, a "Range" key 17 for setting X- and Y-coordinate ranges of an input formula, and changing the coordinate ranges of a displayed graph, cursor keys 18 used for selecting various data and moving a pointer on the graphic display unit 12, an "EXE" key 19 for executing various functions such as enlargement arithmetic processing of a graph, and the like.

The graphic display unit 12 has, e.g., a 64 (vertical dots) by (horizontal dots) liquid-crystal display screen, and displays a graph corresponding to, e.g., a functional formula input using the numeric·symbol keys 13 in accordance with the coordinate ranges of the X- and Y-axes, which are designated by a user.

If there are two input formulas, and the first and second screen areas 12a and 12b are respectively designated for these formulas, the graphs of the corresponding formulas are calculated and divisionally displayed on the designated screen areas 12a and 12b.

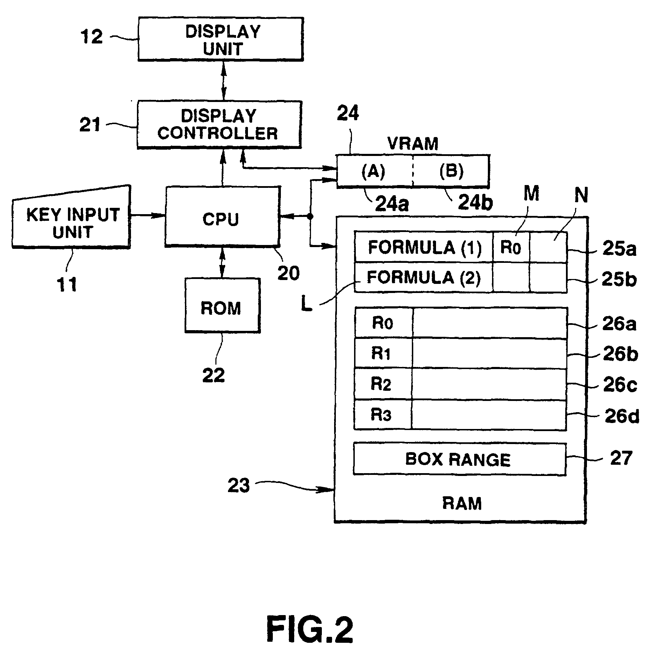

FIG. 2 is a block diagram showing the arrangement of an electronic circuit of the graph display apparatus.

The electronic circuit of the graph display apparatus comprises a CPU (central processing unit) 20, and the CPU 20 executes operation control of the respective circuit units.

The CPU 20 is connected to the key input unit 11 and also to the graphic display unit 12 via a display controller 21. The CPU 20 is also connected to a ROM 22, a RAM 23, and a VRAM 24.

The ROM 22 pre-stores a basic system program for operating the graph display apparatus, and also pre-stores a graph display processing program, a divisional display processing program, an enlargement display processing program, a range setting processing program, and the like, which are used for displaying graphs in correspondence with key-input functional formulas.

The control operation of the CPU 20 is executed in accordance with the programs stored in the ROM 22.

The RAM 23 comprises first and second registers 25a and 25b in addition to key input registers, various flag registers (not shown), and the like. Each of the first and second registers 25a and 25b includes a storage area L for storing an input functional formula in accordance with operations of the numeric·symbol keys 13, a storage area M for storing range setting codes (R0 through R3) indicating coordinate ranges of the input formula, and a storage area N for storing a screen designation code (A or B) indicating a display screen area. The RAM 23 also comprises R0, R1, R2, and R3 registers 26a, 26b, 26c, and 26d in which four different sets of X- and Y-coordinate ranges input in advance by a user are respectively set, a box range register 27 in which X- and Y-coordinate ranges of a range to be enlarged, which is designated by a box on the display unit 12 in the graph enlargement display mode, are set, and the like.

The VRAM 24 has a video memory area having dots in one-to-one correspondence with dots of the display area on the graphic display unit 12. when the graph divisional display mode is set, the VRAM 24 is divided into two memory areas 24a and 24b, and graphic data is stored in one or both of the two areas.

The operation of the graph display apparatus with the above-mentioned arrangement will be described below.

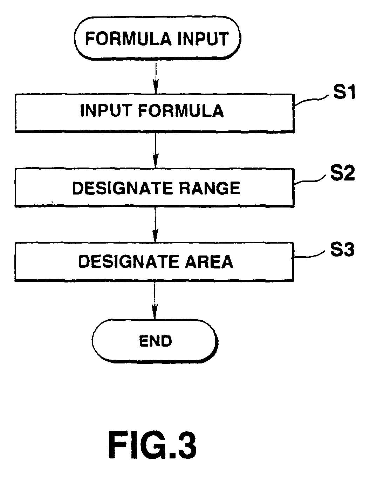

FIG. 3 is a flow chart showing graph formula input processing in the graph display apparatus.

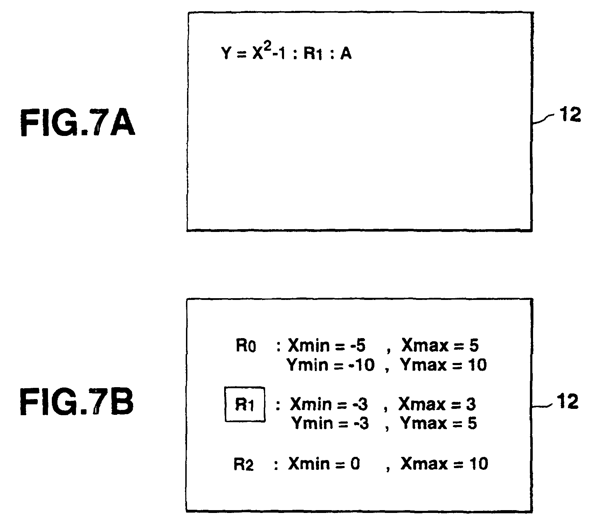

More specifically, in the graph formula input processing shown in FIG. 3, if a functional formula (e.g., "Y = X² - 1") to be displayed as a graph is input by operating the numeric·symbol keys 13 on the key input unit 11, the input formula is stored in the storage area L in the first register 25a in the RAM 23, and is displayed on the graph display unit 12, as shown in FIG. 7A (step S1).

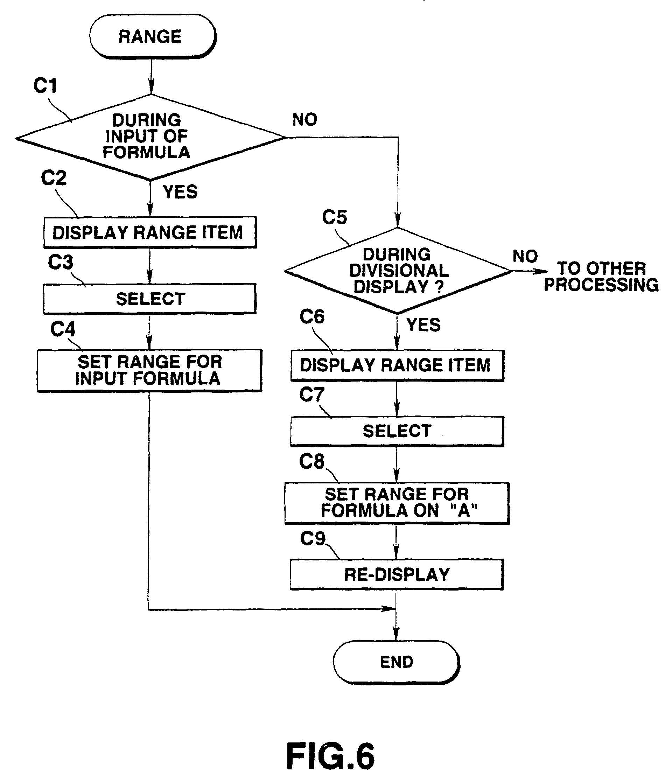

In this case, when the "Range" key 17 is operated to set X- and Y-coordinate ranges for the input formula, coordinate range setting processing shown in FIG. 6 is started (step S2).

More specifically, in the coordinate range setting processing shown in FIG. 6, it is checked if the "Range" key 17 is operated while the formula is being input to the storage area L in the register 25a in the RAM 23 (step C1). If YES in step C1, the four different sets of X- and Y-coordinate ranges set in the R0 through R3 registers 26a through 26d are read out, and are displayed as items on the graphic display unit 12, as shown in FIG. 7B (step C1 → C2).

In this case, if "R1" is designated as the X- and Y-coordinate ranges for the input formula by operating the cursor keys 18, the range setting code "R1" is stored in the storage area M in the register 25a, and is also displayed in correspondence with the input formula "Y = X² - 1", as shown in FIG. 7A (steps C3 and C4).

If the "A" key 14a is operated to designate the first screen area 12a on the graphic display unit 12 as a graph display area of the input formula, in the graph formula input processing shown in FIG. 3, the screen designation code "A" is stored in the storage area N in the register 25a, and is displayed in correspondence with the input formula "Y = X² - 1" and the range setting code "R1", as shown in FIG. 7A (step S3).

Thereafter, when the second formula to be displayed as a graph is input, and its coordinate range and display area are designated, the input formula, range setting code, and screen designation code are stored in the register 25b in the RAM 23 in accordance with the same graph formula input processing.

In the graph formula input processing, if the display area of a formula is not designated, the corresponding graph is not displayed or is forcibly displayed on the first screen area 12a in the graph display processing of the input formula.

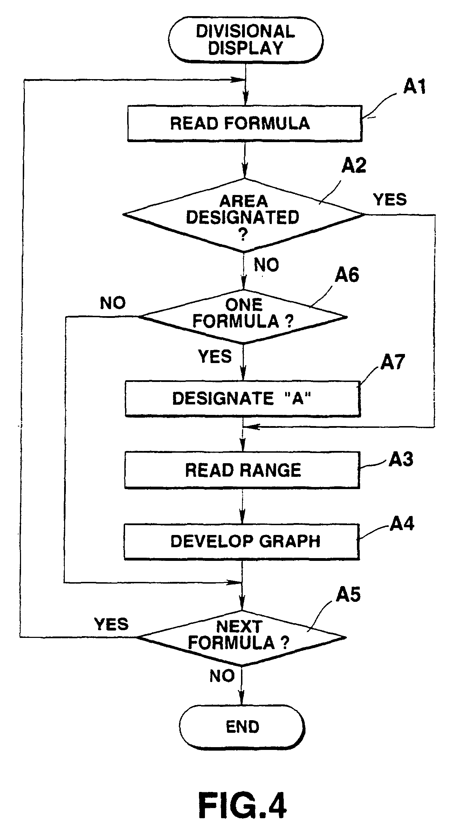

In a state wherein the graph formulas are stored in the registers 25a and 25b in the RAM 23 in correspondence with their range setting codes and screen designation codes in this manner, if the "division" key 15 is operated to display the graphs of these graph formulas on independent coordinate ranges', graph divisional display processing shown in FIG. 4 is started.

More specifically, a graph formula stored in the formula register 25a is read out, and if it is determined that a display area is designated by the screen designation code "A", X- and Y-coordinate ranges corresponding to the range setting code "R1" stored in the register 25a are read out from the R1 register 26b (step A1, A2 → A3).

The graph of the graph formula read out from the formula register 25a is calculated in accordance with the readout X- and Y-coordinate ranges, and is written in the first memory area 24a in the VRAM 24. Thereafter, the graph is developed and displayed on the first screen area 12a on the graphic display unit 12, as shown in, e.g., FIG. 1 (step A4).

When the second formula is stored in the register 25b, it is determined that the next formula is present, and the graph formula stored in the register 25b is read out (step A5 → A1).

If it is determined that a display area is designated by the screen designation code "B" in the register 25b, X- and Y-coordinate ranges corresponding to the range setting code "R0" stored in the register 25b are read out from the R0 register 26a (step A2 → A3).

The graph of the graph formula read out from the formula register 25b is calculated in accordance with the readout X- and Y-coordinate ranges, and is written in the second memory area 24b in the VRAM 24. Thereafter, the graph is developed and displayed on the second screen area 12b on the graphic display unit 12, as shown in, e.g., FIG. 1 (step A4).

On the other hand, when only a graph formula is stored in the register 25a in the RAM 23, and its range setting code "R1" is stored but no display area is designated by the screen designation code, it is determined that "no display area is designated" and "the number of graph formulas is one" when the graph formula is read out from the register 25a. For this reason, as a graphic display area of the stored graph formula, the first screen area 12a corresponding to the screen designation code "A" is designated (step A1, A2 → A6 → A7).

Then, X- and Y-coordinate ranges corresponding to the range setting code "R1" stored in the formula register 25a are read out from the R1 register 26b (step A3).

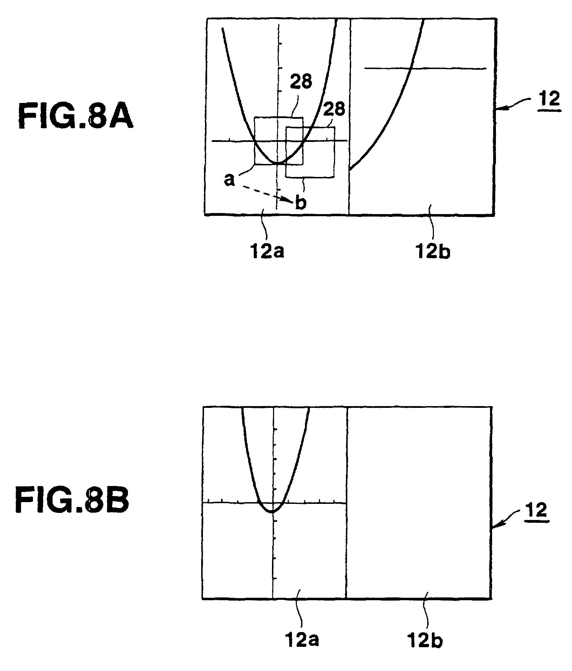

The graph of the graph formula read out from the register 25a is calculated in accordance with the readout X- and Y-coordinate ranges, and is written in the first memory area 24a in the VRAM 24. Thereafter, the graph is developed and displayed on the first screen area 12a on the graphic display unit 12, as shown in, e.g., FIG. 8A (step A4).

In this case, since no second formula is stored in the register 25b, it is determined that the next formula is absent, and the series of divisional display processing operations end (step A5).

On the other hand, in a state wherein the first and second formulas are respectively stored in the registers 25a and 25b, assume that no screen designation code is set for the first formula but the screen designation code "A" is set for the second formula. In this case, when a graph formula is read out from the register 25a, it is determined that "no display area is designated" and "the number of graph formulas is not one", and hence, the graph of the first formula is not displayed (step A1, A2 → A6 → A5).

When the second formula is read out from the formula register 25b, it is determined that a display area is designated by the screen designation code "A". Therefore, the graph of the second formula is calculated in accordance with the X- and Y-coordinate ranges corresponding to the range setting code stored in the register 25b, and is written in the first memory area 24a in the VRAM 24. Thereafter, the graph of the second formula is developed and displayed on the first display area 12a on the graphic display unit 12, as shown in, e.g., FIG. 8A (step A4).

Furthermore, in a state wherein the first and second formulas are respectively stored in the registers 25a and 25b, assume that a screen designation code is set for neither the first formula nor the second formula. For either of the first and second formulas, which is read out, it is determined that "no display area is designated" and "the number of graph formulas is not one", and the graph of neither the first nor second formula is displayed (step A1, A2 → A6 → A5).

More specifically, with the graph divisional display processing, the graph of a graph formula stored in the register 25a or 25b is appropriately divisionally displayed on the first or second display area 12a or 12b of the graphic display unit 12 in accordance with the presence/absence of the screen designation code.

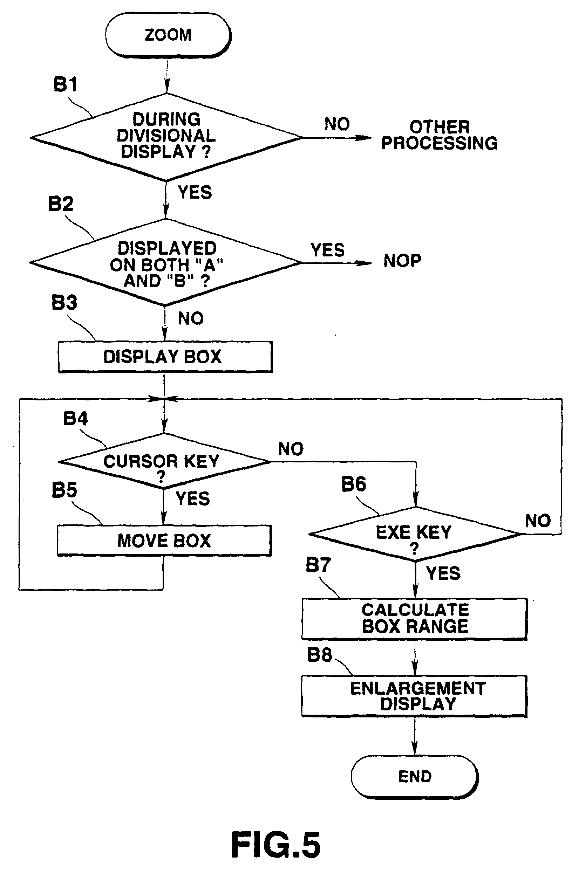

When the "Zoom" key 16 on the key input unit 11 is operated in a state wherein graphic data is displayed on the first screen area 12a on the graphic display unit 12, as shown in FIG. 8A, in correspondence with, e.g., the graph formula "Y = X² - 1: R1 : A" stored in the register 25a by the graph divisional display processing shown in FIG. 4, graph enlargement display processing shown in FIG. 5 is started.

More specifically, upon operation of the "Zoom" key 16, if it is determined that a graph is being currently divisionally displayed, and a graph display is made on only one of the first and second screen areas 12a and 12b on the graphic display unit 12, it is determined that an enlarged graph of the graph which is being displayed on one display area (in this case, the first screen area 12a) can be divisionally displayed on the other display area (the second screen area 12b). Then, an enlargement designation box 28 having a predetermined size indicating a range to be enlarged is displayed at a position a having a coordinate intersection as the center on the graph of the first formula displayed on the first screen area 12a via the first memory area 24a in the VRAM 24 (step B1 → B2 → B3).

When the enlargement designation box 28 is moved by operating the cursor keys 18 to set the range to be enlarged for the graph on the first screen area 12a at a desired position b, and the "EXE" key 19 is operated, the X- and Y-coordinate ranges of the range to be enlarged are calculated in correspondence with the position b on the first screen area 12a where the enlargement designation box 28 is displayed, and are written in the box range register 27 in the RAM 23 (step B4 → B5, B6 → B7).

Then, the graph of the graph formula "Y = X² - 1" stored in the register 25a is re-calculated in accordance with the X- and Y-coordinate ranges of the range to be enlarged stored in the box range register 27, and is written in the second memory area 24b in the VRAM 24. Thereafter, the re-calculated graph is displayed in an enlarged scale on the second screen area 12b on the graphic display unit 12, as shown in FIG. 8A (step B8).

More specifically, with the graph enlargement display processing, a partial region of a graph displayed on one display area on the graphic display unit 12 is designated by the enlargement designation box 28, and is divisionally displayed in an enlarged scale on the other display area.

When the "Range" key 17 on the key input unit 11 is operated in a state wherein graphic data is displayed on the first screen area 12a on the graphic display unit 12, as shown in FIG. 8A, in correspondence with the graph formula "Y = X² - 1: R1: A" stored in the register 25a by the graph divisional display processing shown in FIG. 4, coordinate range setting processing shown in FIG. 6 is started.

More specifically, upon operation of the "Range" key 17, if it is determined that a graph is being divisionally displayed based on the graph divisional display processing, the four different sets of X- and Y-coordinate ranges set in the R0 through R3 registers 26a through 26d in the RAM 23 are read out, and are displayed as items on the graphic display unit 12 (step C5 → C6).

In this state, when "R0" is designated by operating the cursor keys 18 as new X- and Y-coordinate ranges for the graph formula "Y = X² - 1" whose graph is displayed on the first screen area 12a in accordance with the coordinate ranges "R1", the range setting code "R0" is stored in the formula register 25a in correspondence with the graph formula "Y = X² - 1" on the first screen area 12a (steps C7 and C8).

Then, X- and Y-coordinate ranges corresponding to the new range setting code "R0" set in the formula register 25a are read out from the R0 register 26a, the graph of the graph formula "Y = X² - 1" is re-calculated in accordance with the new X- and Y-coordinate ranges. The calculated graph is written in the first memory area 24a in the VRAM 24, and is re-displayed on the first screen area 12a on the graphic display unit 12, as shown in FIG. 8B (step C9).

Thus, the X- and Y-coordinate ranges of the graph displayed on the first screen area 12a are changed from "R1" to "R0", and the graph is re-displayed on the first screen area 12a.

Therefore, according to the graph display apparatus with the above-mentioned arrangement, formulas input using the numeric·symbol keys 13 on the key input unit 11 are stored in the registers 25a and 25b in the RAM 23 together with their range setting codes (R0 through R3) and their screen designation codes (A and B). Upon operation of the "division" key 15, the graph of the first formula is calculated in accordance with X- and Y-coordinate ranges read out from, e.g., the R0 register 26a in correspondence with the range setting code "R0", is written in the first memory area 24a in the VRAM 24 in correspondence with the screen designation code "A", and is displayed on the first screen area 12a on the graphic display unit 12. On the other hand, the graph of the second formula is calculated in accordance with X- and Y-coordinate ranges read out from, e.g., the R1 register 26b in correspondence with the range setting code "R1", is written in the second memory area 24b in the VRAM 24 in correspondence with the screen designation code "B", and is displayed on the second screen area 12b. Therefore, for example, a plurality of graphs can be displayed on different coordinate systems in comparison with each other, and can be analyzed.

On the other hand, when the "Zoom" key 16 is operated in a state wherein a graph is displayed on one display area on the graphic display unit 12, a range to be enlarged of the graph is set by the enlargement designation box 28, and the X- and Y-coordinate ranges in the box are written in the box range register 27. The graph of the currently displayed graph formula is re-calculated in accordance with the box range, and is displayed in an enlarged scale on the other display area. Therefore, graphs can be divisionally displayed in normal and enlarged scales and analyzed.

Note that the "Range" key 17 on the key input unit 11 used in the above embodiment can be utilized not only for setting or changing the display coordinate ranges but also for switching initial values a0 and a1 of a recurrence formula, switching a coefficient of a functional formula to A1, A2,..., and son on.

In this case, the initial values a0 and a1 of the recurrence formula, the coefficients A1, A2,... of the functional formula, and the like may be stored in advance in, e.g., a RAM, and may be displayed and selected upon operation of the "Range" key 17.

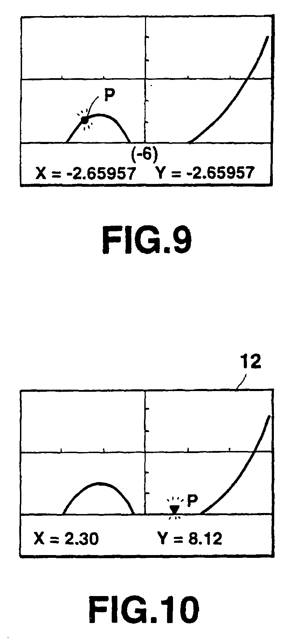

Note that the present invention is not limited to the above embodiment, and various applications may be made. For example, as shown in FIG. 9, a flickering pointer P may be displayed on a graph, and X- and Y-values at the displayed position may be displayed. In this case, the coordinate pitch in units of pixels in the X-direction is calculated by dividing the designated coordinate range by the number of pixels in the X-direction. However, most calculations yield indivisible fractions, and the point coordinates of the pointer P, which are calculated by substituting the X-coordinate in units of display dots in the functional formula to calculate the Y-coordinate, have a larger number of digits than required, as shown in FIG. 9. As a result, the displayed values are not easy to read.

To solve this problem, a user may designate an effective range, e.g., up to the second digit below the decimal point by a key input operation, and the third digit may be rounded off or the second digit value may be increased by one depending on the third digit value. In place of designating an effective range below the decimal point, a plurality of upper digits (e.g., only upper 3 digits if "3" is input by a key input operation) may be designated as an effective range.

The pointer P may be set to be movable on the graph by the cursor keys, and when the pointer P reaches an end portion of the graph display screen where no graph can be displayed, for example, when the pointer P reaches the lower end of the Y-axis, as shown in FIG. 10, the pointer P may be moved along the X-axis at the end portion, and X- and Y-values on the non-displayed graph portion may be numerically displayed.

According to the graph display apparatus of the present invention, graphs corresponding to a plurality of formulas input by formula input means can be divisionally displayed at the same time.

When an enlargement mode is designated for a graph displayed on one divided screen area on display means, the designated graph can be displayed in an enlarged scale on the other divided screen area of the display means.

## Claims

1. A graph display control apparatus comprising:
input means (13) for inputting functional formula data for displaying a graph, and coordinate range data showing a range of the graph to be displayed;
a first storage means (25a, 25b, 26a to 26d) for storing the formula data and the coordinate range data inputted by the input means; and
a graph display means (12) including a first graph display area (12a); and
a display control means (20) for preparing a first graph based on the formula data and the coordinate range data stored in the first storage means and for displaying the prepared first graph on the first graph display area (12a);
**characterized by** further comprising:
the graph display means (12) including a second graph display area (12b);
an enlargement range designating means (16, 19, 28) for designating an enlargement range of the first graph to be displayed in an enlarged scale with the first graph displayed by the display control means (20);
a second storage means (27) for storing maximum and minimum coordinate data of the enlargement range of the first graph designated by the enlargement range designating means;
the display control means (20) capable of displaying on the first graph display area (12a) a box having dimensions defined by the maximum and minimum coordinate data stored in the second storage means (27);
an enlargement display start designating means (19) for designating start of enlargement display of a graph; and
the display control means (20) capable of displaying on the second graph display area (12b) in an enlarged scale as a second graph the enlargement range portion of the displayed first graph, designated by the enlargement range designating means based on the maximum and the minimum coordinate data stored in the second storage means, upon the designation by the enlargement display start designating means.

2. The graph display control apparatus according to claim 1, **characterized in that** the graph display control apparatus is an electronic equipment having a shape of size bearable to a user.

3. The apparatus according to claim 1,
**characterized by**
the display control means (20) capable of displaying the first graph along with X and Y axes on the first graph display area (12a).

4. A graph display control method to be used in a graph display control apparatus comprising:
input means (13) for inputting functional formula data for displaying a graph, and coordinate range data showing a range of the graph to be displayed;
a first storage means (25a, 25b, 26a to 26d) for storing the formula data and the coordinate range data inputted by the input means; and
a graph display means (12) including a first graph display area (12a); and
a display control means (20) for preparing a first graph based on the formula data and the coordinate range data stored in the first storage means and for displaying the prepared first graph on the first graph display area (12a);
**characterized by** the following steps:
a display control step for designating an enlargement range of the first graph to be displayed in an enlarged scale and for displaying a box having dimensions defined by maximum and minimum coordinate data in the designated enlargement range on the first graph display area (12a);
a step of storing maximum and minimum coordinate data of the enlargement range of the first graph;
an enlargement display start designating step for designating a start of the enlargement display of the first graph; and
a further display control step for displaying on a second graph display area (12b) of the graph display means (12), in an enlarged scale as a second graph the designated enlargement range portion of the displayed first graph based on the maximum and the minimum coordinate data stored in the second storage means, upon the designation of the enlargement display start designating means.

5. The graph display control method according to claim 4, **characterized in that** the graph display control apparatus used is an electronic equipment having a shape of size bearable to a user.

6. The method according to claim 4,
**characterized by**
a step of controlling the display control means (20) for displaying the first graph on the first graph display area along with the X and Y axes.

## Patentansprüche

1. Graphenanzeigesteuervorrichtung mit:
einer Eingabeeinrichtung (13) zum Eingeben von Funktionsformeldaten zum Anzeigen eines Graphen und von Koordinatenbereichsdaten, die einen Bereich des Graphen zeigen, der angezeigt wird;
einer ersten Speichereinrichtung (25a, 25b, 26a bis 26d) zum Speichern der Formeldaten und der Koordinatenbereichsdaten, die mit der Eingabeeinrichtung eingegeben wurden, und
einer Graphenanzeigeeinrichtung (12) mit einer ersten Graphenanzeigefläche (12a) und
einer Anzeigesteuereinrichtung (20) zum Vorbereiten eines ersten Graphen auf der Grundlage der in der ersten Speichereinrichtung gespeicherten Formeldaten und Koordinatenbereichsdaten und zum Anzeigen des vorbereiteten ersten Graphen auf der ersten Graphenanzeigefläche (12a);
weiterhin **gekennzeichnet durch:**
die Graphenanzeigeeinrichtung (12) mit einer zweiten Graphenanzeigefläche (12b);
eine Vergrößerungsbereichs-Bestimmungseinrichtung (16, 19, 28) zum Bestimmen eines Vergrößerungsbereiches des ersten Graphen, der in vergrößertem Maßstab angezeigt werden soll, wobei der erste Graph von der Anzeigesteuereinrichtung (20) angezeigt wird;
eine zweite Speichereinrichtung (27) zum Speichern der maximalen und minimalen Koordinatendaten für den Vergrößerungsbereich des ersten Graphen, der von der Vergrößerungsbereichs-Bestimmungseinrichtung bestimmt worden ist;
die Anzeigesteuereinrichtung (20), die imstande ist, auf der ersten Graphenanzeigefläche (12a) einen Rahmen mit Abmessungen anzuzeigen, die **durch** die in der zweiten Speichereinrichtung (27) gespeicherten maximalen und minimalen Koordinatendaten definiert sind;
eine Vergrößerungsanzeigestart-Bestimmungseinrichtung (19) zum Bestimmen des Starts der Vergrößerungsanzeige eines Graphen und
die Anzeigesteuereinrichtung (20), die imstande ist, auf der zweiten Graphenanzeigefläche (12b) in vergrößertem Maßstab den Teil des Vergrößerungsbereichs des ersten dargestellten Graphen, der auf der Grundlage der in der zweiten Speichereinrichtung gespeicherten maximalen und minimalen Koordinatendaten von der Vergrößerungsbereich-Bestimmungseinrichtung festgelegt wurde, nach Bestimmung **durch** die Vergrößerungsanzeigestart-Bestimmungseinrichtung als zweiten Graphen anzuzeigen.

2. Graphenanzeigesteuervorrichtung nach Anspruch 1, **gekennzeichnet dadurch, dass** die Graphenanzeigesteuervorrichtung ein elektronisches Gerät mit für einen Anwender tragbarer Größe ist.

3. Vorrichtung nach Anspruch 1,
**gekennzeichnet durch**
die Anzeigesteuereinrichtung (20), die imstande ist, den ersten Graphen mit X-und Y-Achse auf der ersten Graphenanzeigefläche (12a) anzuzeigen.

4. Graphenanzeigesteuerverfahren zur Verwendung in einer Graphenanzeigesteuervorrichtung, welches umfasst:
eine Eingabeeinrichtung (13) zum Eingeben der Funktionsformeldaten zum Anzeigen eines Graphen und von Koordinatenbereichsdaten, die einen Bereich des Graphen zeigen, der angezeigt wird;
eine erste Speichereinrichtung (25a, 25b, 26a bis 26d) zum Speichern der Formeldaten und der Koordinatenbereichsdaten, die mit der Eingabeeinrichtung eingegeben wurden; und
eine Graphenanzeigeeinrichtung (12) mit einer ersten Graphenanzeigefläche (12a) und
eine Anzeigesteuereinrichtung (20) zum Vorbereiten eines ersten Graphen auf der Grundlage der in der ersten Speichereinrichtung gespeicherten Formeldaten
und Koordinatenbereichsdaten und zum Anzeigen des vorbereiteten ersten Graphen auf der ersten Graphenanzeigefläche (12a);
**gekennzeichnet durch** die folgenden Schritte:
einen Anzeigesteuerschritt zum Bestimmen eines Vergrößerungsbereiches des ersten Graphen, der in vergrößertem Maßstab angezeigt werden soll, und zum Anzeigen eines Rahmens mit Abmessungen, die **durch** die maximalen und minimalen Koordinatendaten in dem angegebenen Vergrößerungsbereich auf der ersten Graphenanzeigenfläche (12a) definiert sind;
einen Schritt des Speicherns der maximalen und minimalen Koordinatendaten des Vergrößerungsbereiches des ersten Graphen;
einen Vergrößerungsanzeigestart-Bestimmungsschritt zum Bestimmen des Starts einer Vergrößerungsanzeige des ersten Graphen und
einen weiteren Anzeigesteuerschritt, in dem auf einer zweiten Graphenanzeigefläche (12b) der Graphenanzeigeeinrichtung (12) in vergrößertem Maßstab der angegebene Teil des Vergrößerungsbereichs des angezeigten ersten Graphen auf der Grundlage der in der zweiten Speichereinrichtung gespeicherten maximalen und minimalen Koordinatendaten nach Bestimmung **durch** die Vergrößerungsanzeigestart-Bestimmungseinrichtung als zweiter Graph angezeigt wird.

5. Graphenanzeige-Steuerverfahren nach Anspruch 4, **gekennzeichnet dadurch, dass** die verwendete Graphenanzeigesteuervorrichtung ein elektronisches Gerät mit für einen Anwender tragbarer Größe ist.

6. Verfahren nach Anspruch 4,
**gekennzeichnet durch**
einen Schritt des Steuerns der Anzeigesteuereinrichtung (20) zum Anzeigen des ersten Graphen auf der ersten Graphenanzeigefläche zusammen mit der X- und Y-Achse.

## Revendications

1. Appareil de contrôle d'affichage de graphique comprenant :
des moyens d'entrée (13) pour entrer des données de formule fonctionnelle pour afficher des graphiques et des données de plage de cordonnées représentant une plage du graphique à afficher ;
des premiers moyens de mémoire (25a, 25b, 26a à 26d) pour mémoriser les données de formule et les données de plage de coordonnées entrées par les moyens d'entrée ; et
des moyens d'affichage de graphique (12) comprenant une première zone d'affichage de graphique (12a); et
des moyens de contrôle d'affichage (20) afin de préparer un premier graphique en fonction des données de formule et des données de plage de coordonnées mémorisées dans les premiers moyens de mémoire et afin d'afficher le premier graphique préparé sur la première zone d'affichage de graphique (12a),
**caractérisé en ce qu'**il comporte :
les premiers moyens d'affichage de graphique (12) comprenant une seconde zone d'affichage de graphique (12b) ;
des moyens de désignation de plage d'agrandissement (16, 19, 28) afin de désigner une plage d'agrandissement du premier graphique à afficher selon une échelle agrandie avec le premier graphique affiché par les moyens de contrôle d'affichage (20) ;
des seconds moyens de mémoire (27) pour mémoriser des données de cordonnées maximum et minimum de la plage d'agrandissement du premier graphique désignée par les moyens de désignation de plage d'agrandissement ;
des moyens de contrôle d'affichage (20) aptes à afficher sur la première zone d'affichage de graphique (12a) un cadre ayant des dimensions définies par les données de coordonnées maximum et minimum mémorisées dans les seconds moyens de mémoire (27) ;
des moyens de désignation (19) de début d'affichage agrandi pour désigner le début de l'affichage agrandi d'un graphique ; et
les moyens de contrôle d'affichage (20) pouvant afficher sur la seconde zone d'affichage de graphique (12b) à une échelle agrandie en tant que second graphique la partie de plage d'agrandissement du premier graphique affiché désignée par les moyens de désignation de plage d'agrandissement en fonction des données de coordonnées maximum et minimum mémorisées dans les seconds moyens de mémoire, après la désignation par les moyens de désignation de début d'affichage agrandi.

2. Appareil de contrôle d'affichage de graphique selon la revendication 1, **caractérisé en ce que** l'appareil de contrôle d'affichage de graphique est un équipement électronique ayant une forme de dimension portable par un utilisateur.

3. Appareil selon la revendication 1, **caractérisé par**
les moyens de contrôle d'affichage (20) pouvant afficher le premier graphique conjointement avec des axes X et Y sur la première zone d'affichage de graphiques (12a).

4. Procédé de contrôle d'affichage de graphique utilisé dans un appareil de contrôle d'affichage de graphique comprenant :
des moyens d'entrée (13) afin d'entrer des données de formule fonctionnelle pour afficher un graphique, et des données de plage de coordonnées représentant une plage du graphique à afficher ;
des premiers moyens de mémoire (25a, 25b, 26a à 26d) pour mémoriser les données de formule et les données de plage de coordonnées entrées par les moyens d'entrée ; et
des moyens d'affichage de graphique (12) comprenant une première zone d'affichage de graphique (12a); et
des moyens de contrôle d'affichage (20) afin de préparer un premier graphique en fonction des données de formule et des données de plage de coordonnées mémorisées dans les premiers moyens de mémoire et afin d'afficher le premier graphique préparé sur la première zone d'affichage de graphique (12a) ;
**caractérisé par** les étapes suivantes :
une étape de contrôle d'affichage pour désigner une plage d'agrandissement du premier graphique à afficher à une échelle agrandie et afin d'afficher un cadre ayant des dimensions définies par des données de coordonnées maximum et minimum dans la plage d'agrandissement désignée sur la première zone d'affichage de graphique (12a) ;
une étape de mémorisation de données de coordonnées maximum et minimum de la plage d'agrandissement du premier graphique ;
une étape de désignation de début d'affichage d'agrandissement afin de désigner un début de l'affichage agrandi du premier graphique ; et
une autre étape de contrôle d'affichage afin d'afficher sur une seconde zone d'affichage de graphique (12b) des moyens d'affichage de graphique (12), à grande échelle en tant que second graphique, la partie de plage d'agrandissement désignée du premier graphique affiché en fonction des données de coordonnées maximum et minimum mémorisées dans les seconds moyens de mémoire, après désignation des moyens de désignation de début d'affichage agrandi.

5. Procédé de contrôle d'affichage de graphique selon la revendication 4, **caractérisé en ce que** l'appareil de contrôle d'affichage de graphique utilisé est un équipement électronique ayant une forme de dimension portable par un utilisateur.

6. Procédé selon la revendication 4, **caractérisé par** une étape de contrôle des moyens de contrôle d'affichage (20) afin d'afficher le premier graphique sur la première zone d'affichage de graphique conjointement avec les axes X et Y.
